# EUROPÄISCHE PATENTSCHRIFT

(11) **EP 1 371 405 B1**
(45) Veröffentlichungstag und Bekanntmachung des Hinweises auf die Patenterteilung: **05.04.2006**
(21) Anmeldenummer: 03000997.1
(22) Anmeldetag: 17.01.2003
(51) Int. Cl.: B01D 29/03, B01D 29/21, B01D 29/23, B01D 69/04, B01D 39/20

(54) **Verfahren zur Herstellung eines Rohrfilters durch Wickeln sowie Rohrfilter**
Process for manufacturing of a tubular filter by winding and tubular filter
Procédé de fabrication d'un filtre tubulaire par enroulement et filtre tubulaire

(30) Priorität: 11.06.2002 DE 10225909
(43) Veröffentlichungstag der Anmeldung: 17.12.2003
(73) Patentinhaber: Intensiv-Filter GmbH & Co KG, D-42555 Velbert - Langenberg (DE)
(72) Erfinder: Pfeil, Berthold, 45527 Hattingen (DE)
(74) Vertreter: Christophersen & Partner

(56) Entgegenhaltungen:
- EP-A- 0 046 352
- DE-A- 19 543 954
- GB-A- 968 831
- US-A- 3 715 036
- US-A- 4 101 423
- US-A- 6 077 376
- PATENT ABSTRACTS OF JAPAN vol. 004, no. 073 (C-012), 28. Mai 1980 (1980-05-28) & JP 55 039279 A (YUASA BATTERY CO LTD), 19. März 1980 (1980-03-19)
- PATENT ABSTRACTS OF JAPAN vol. 018, no. 027 (M-1543), 17. Januar 1994 (1994-01-17) & JP 05 263415 A (SEIJI NAGAYOSHI), 12. Oktober 1993 (1993-10-12)

## Beschreibung

Die Erfindung betrifft zunächst ein Verfahren zur Herstellung eines Rohrfilters durch Wickeln einer kontinuierlich zugeführten Materialbahn aus porösem, luftdurchlässigem Filtermaterial, wobei der Rand der bei dem Wickelprozeß neu erzeugten Windung der Materialbahn den Außenrand der zuletzt erstellten Windung überlappt, und die Windungen im Überlappungsbereich dauerhaft miteinander verbunden werden.

Die Erfindung betrifft ferner ein Rohrfilter, welches z.B. nach dem erfindungsgemäßen Verfahren herstellbar ist.

Zur Abscheidung von Stäuben werden in der Praxis häufig Filter mit Filterelementen in Form von Schlauchfiltern eingesetzt, die aus einem Gewebe, z.B. einem Nadelfilz oder aus natürlichen, aber auch synthetischen Fasern wie z.B. Polyesterfaser hergestellt sind. Innerhalb des Staubfilters sind diese Filterelemente in dem das staubhaltige Gas aufweisenden Raum angeordnet, wobei sie von außen nach innen von dem Gas durchströmt werden, und sich die Staubpartikel am Umfang der Filterelemente anlagern. Der Innenraum der Filterelemente steht mit einem Reingasraum in Verbindung, der gegenüber dem Staubgasraum mit einem geringeren Druck betrieben wird, und von dem aus das gereinigte Gas schließlich das Entstaubungsfilter verläßt. Die bei derartigen Anlagen verwendeten Schlauchfilter bestehen häufig aus schlaffen, leicht verformbaren Materialien, die keine selbsttragenden Eigenschaften aufweisen. Um gleichwohl die erforderliche Stabilität zu erzielen, werden aus einem Metallgeflecht bestehende Stützkörbe in die Schlauchfilter eingezogen. Die einzige Aufgabe solcher Stützkörbe besteht darin, auch bei dem während des Betriebs herrschenden Differenzdruck zwischen Staubgas- und Reingasseite das Kollabieren der Filterelemente zu verhindern.

Ein solches Filterelement ist beispielsweise aus der EP 0 046 352 A1 bekannt. Zur Stabilisierung des Filterschlauches ist dort ein Drahtkäfig in dessen Innern angeordnet. Innerhalb des Käfiges befindet sich eine aus einem Lochblechstreifen gefertigte Diffusorröhre, die zum gleichmäßigen Einblasen von Druckluft in das Innere des Filterschlauchs dient.

Außer den voranstehend beschriebenen Schlauchfiltern sind auch bereits selbsttragende Filterelemente bekannt, die ohne die genannten Stützkörbe auskommen. Derartige Filterelemente sind z.B. in der DE 44 40 279 A1 beschrieben. Sie sind aus gewickelten Materialbahnen hergestellt, wobei diese Materialbahnen aus einem verfestigten Faservlies-, Nadelfilz- oder Gewebematerial bestehen. Beim Aufwickeln der Materialbahn um einen Wickeldorn werden die Randabschnitte der Materialbahn verstärkt, so daß diese Randabschnitte eine gewisse Stützfunktion auf das zylindrische Filterelement ausüben und als Ersatz für den nicht mehr vorhandenen Stützkorb dienen. Die Verfestigung im Bereich der Randabschnitte der Materialbahn wird z.B. erreicht, indem beim Wickeln ein Streifen aus einem besonders biegesteifen Material, wie z.B. ein Stahldraht oder dergleichen, mit eingelegt wird. Alternativ wird vorgeschlagen, die Wicklung der Filterelemente unter Verwendung eines in seiner Materialstruktur bereits vorab verfestigten Materials durchzuführen, wobei beim oder nach dem Aufwickeln noch ein Verkleben der sich überlappenden Randbereiche erforderlich ist.

Sowohl das bereits vor dem Wicklungsprozeß durchgeführte Verfestigen der Ränder der für die Wicklung verwendeten Materialbahnen, wie auch das zusätzliche Einwickeln z.B. eines verstärkenden Stahldrahtes führen zu einem erhöhten Fertigungsaufwand. Von Nachteil ist ferner das Verkleben der einzelnen Windungen, da der Klebeprozeß sehr sorgfältig durchgeführt werden muß und damit anfällig gegenüber jeder Art von Fertigungsschwankungen ist. Es muß Kleber als Zusatzwerkstoff vorgehalten, gehandhabt, und gegebenenfalls anfallende Reste müssen entsorgt werden. Außerdem sind beim Umgang mit Klebstoffen Schutzmaßnahmen in Bezug auf das damit befaßte Personal erforderlich.

Aus der GB 968 831 A ist ferner ein Verfahren zur Herstellung eines Rohrfilters bekannt, bei dem ein das Filter stabilisierender Draht mit in die Materialbahn eingewickelt ist. Beim Einwickeln des Drahtes wirken Kräfte über die gesamte Breite der Materialbahn des Filtermaterials entweder durch Zug von der Seite her oder durch Druck von oben mittels einer Druckrolle. Nachteilig bei einem solchen Filter ist neben dem mit der zusätzlichen Drahteinlage verbundenen zusätzlichen Fertigungsaufwand vor allem, daß die Filtereigenschaften des Filtermaterials durch die auf die gesamte Materialbahn wirkenden Kräfte beeinträchtigt werden können.

Der Erfindung liegt die **Aufgabe** zugrunde, ein Verfahren zu schaffen, mit dem sich aus Materialbahnen gewickelte Rohrfilter mit hoher Steifigkeit, in wenigen Fertigungsschritten und mit geringen Qualitätsschwankungen herstellen lassen.

Zur **Lösung** wird bei einem Verfahren mit den eingangs genannten Merkmalen vorgeschlagen, daß beide beteiligten Ränder in ihren Überlappungsbereichen durch ausschließlich auf die Ränder einwirkende Verformungskräfte zu Profilquerschnitten verformt werden, die bündig aneinanderliegen, daß die Profilquerschnitte in ihren Überlappungsbereichen durch Ultraschallschweißen verbunden werden, daß die Materialbahn in schräger Ausrichtung einem feststehenden zylindrischen Wickeldorn zugeführt wird, und daß die Verformungskräfte über einen in dem Wickeldorn drehbar gelagerten Profilring in die beiden beteiligten Ränder eingeleitet werden.

Mit einem solchen Verfahren lassen sich Rohrfilter hoher Steifigkeit aus gewickelten Materialbahnen herstellen, wobei zur Durchführung des Verfahrens nur wenige, gegebenenfalls sogar zeitlich nahezu zusammenfallende Fertigungsschritte erforderlich sind, und sich das Verfahren ferner mit geringen Qualitätsschwankungen durchführen läßt. Ein Einsatz von zusätzlichen Materialien wie z.B. Klebstoffen ist nicht notwendig.

Der ab dem Profilring weiterführende Wickeldorn weist ein gewindeförmig vertieftes Profil auf, damit bei den Profilierungen, deren Abmessungen tiefer liegen als der Außendurchmesser des Wickeldorns, dennoch ein kontinuierliches Abziehen des entstandenen Rohres möglich ist.

Das erfindungsgemäße Verfahren eignet sich insbesondere auch für solche Materialbahnen, die mindestens zweilagig aus einer mikroporösen Filterschicht und einer Membranschicht aufgebaut sind. Solche Materialbahnen eignen sich nur bedingt für ein Verkleben, und auch für andere Verbindungstechniken wie z.B. ein Schweißen mit Heißluft, sind derartige Materialbahnen nicht eignet. Vielmehr wäre es vor einem Verschweißen der Materialbahnen mit Heißluft zunächst erforderlich, eine der beiden Schichten der Materialbahn, nämlich die mikroporöse Membranschicht, zunächst bereichsweise zu entfernen. Auch dies wäre wieder mit einem erhöhten Fertigungsaufwand sowie ferner erhöhten Qualitätsrisiken bei der Fertigung verbunden.

Vorzugsweise wird als Membranschicht eine mikroporöse Folie aus PTFE (Polytetrafluoräthylen) verwendet.

Eine weitere Ausgestaltung des Verfahrens ist gekennzeichnet durch Verwendung einer mikroporösen Filterschicht aus einem thermoplastischen Kunststoff. Derartige Kunststoffe haben sich als für eine Verschweißung durch Ultraschall besonders geeignet herausgestellt, wobei die zunächst mikroporöse Struktur der Filterschicht während der Ultraschallbehandlung zugunsten eines mehr homogenen Materialaufbaus aufgelöst wird. Durch diese Überführung in eine homogene Materialstruktur wird eine lokale Verfestigung der Materialbahn erreicht. Diese Verfestigung unterstützt jene Verfestigung, wie sie erfindungsgemäß bereits dadurch erreicht wird, daß die beiden Ränder der Materialbahn in ihren Überlappungsbereichen durch ausschließlich auf diese Ränder einwirkende Verformungskräfte zu Profilquerschnitten verformt werden, die bündig aneinanderliegen. Bereits aufgrund ihrer gebogenen oder abgeknickten Querschnittsgestalt zeichnen sich diese Profilquerschnitte durch eine höhere Festigkeit gegenüber jeder Art von Biege- und Schubspannungskräften aus als die übrigen, flach ausgebildeten Bereiche der Materialbahn.

Ein besonders steifer Profilquerschnitt entlang der Ränder der Materialbahn wird erreicht, indem diese Ränder entweder zu einem konkaven oder zu einem konvexen Profilquerschnitt verformt werden.

In Bezug auf ein Rohrfilter mit den eingangs genannten Merkmalen liegt der Erfindung ferner die **Aufgabe** zugrunde, ein in wenigen Fertigungsschritten und mit geringen Qualitätsschwankungen herstellbares Rohrfilter hoher Steifigkeit zu schaffen.

Hierzu wird bei einem Rohrfilter mit den eingangs genannten Merkmalen vorgeschlagen, daß die Materialbahn im Überlappungsbereich einen Profilquerschnitt aufweist, der aus der Ebene der Materialbahn radial nach innen oder außen versetzt verläuft, und daß jeder Profilquerschnitt an dem ihn überlappenden Profilquerschnitt der jeweils benachbarten Windung bündig anliegt und im Überlappungsbereich durch Ultraschallverschweißung mit diesem verbunden ist.

Vorzugsweise weisen beide Ränder der Materialbahn einen konkaven oder einen konvexen Profilquerschnitt auf.

Infolge der Verschweißung der vorzugsweise einen thermoplastischen Kunststoff enthaltenden Materialbahnen mit Ultraschall weist die Grundschicht der Materialbahn im Überlappungsbereich einen homogenen Materialaufbau auf, während die Grundschicht über ihre übrige Fläche eine mikroporöse Filterstruktur aufweist. Die unterschiedlichen Eigenschaften führen zu einer guten Filterwirkung über nahezu die gesamte Breite der Materialbahn, wohingegen die geringeren Anteile der Randbereiche infolge der homogenisierten Struktur an der Filterwirkung nicht teilnehmen können, jedoch durch ihre Verfestigung entscheidend die Eigenstabilität des Rohrfilters bewirken.

Weitere Vorteile und Einzelheiten werden nachfolgend anhand von Ausführungsbeispielen und unter Bezugnahme auf die anliegenden Zeichnungen erläutert. Darin zeigen:
- Fig.1: in einer Schnittdarstellung den prinzipiellen Aufbau eines Staubfilters, in welches die erfindungsgemäßen Rohrfilter einsetzbar sind;
- Fig. 2: in perspektivischer Darstellung der schematische Ablauf eines Wickelprozesses, bei dem eine schräg zugeführte Materialbahn zu einem zylindrischen Filterrohr gewickelt und beim Wickeln durch Ultraschall verschweißt wird;
- Fig. 3: in vergrößerter Schnittdarstellung den Überlappungsbereich zwischen zwei Windungen der zu dem Filterrohr verarbeitenden Materialbahn; ,
- Fig. 4: eine gegenüber Fig. 3 andere Ausführungsform des Uberlappungsbereiches;
- Fig. 5a: in stark vergrößerter Darstellung eine gegenüber den Fign. 3 und 4 wiederum andere Ausführungsform des Überlappungsbereiches, wobei zusätzlich Teile des Wickeldorns sowie Teile der Ultraschall-Schweißeinrichtung dargestellt sind;
- Fig. 5b: die Gegenstände nach Fig. 5a, jedoch während bzw. kurz nach Abschluß der Ultraschall-Schweißung;
- Fig. 6: in stark verkürzter Darstellung in einem Halbschnitt die beiden Enden des Filterrohres und deren Verbindung einerseits mit dem offenen Kopf, und andererseits mit dem verschlossenen Ende des Rohrfilters, und
- Fig. 7: eine Variante zu Fig. 6.

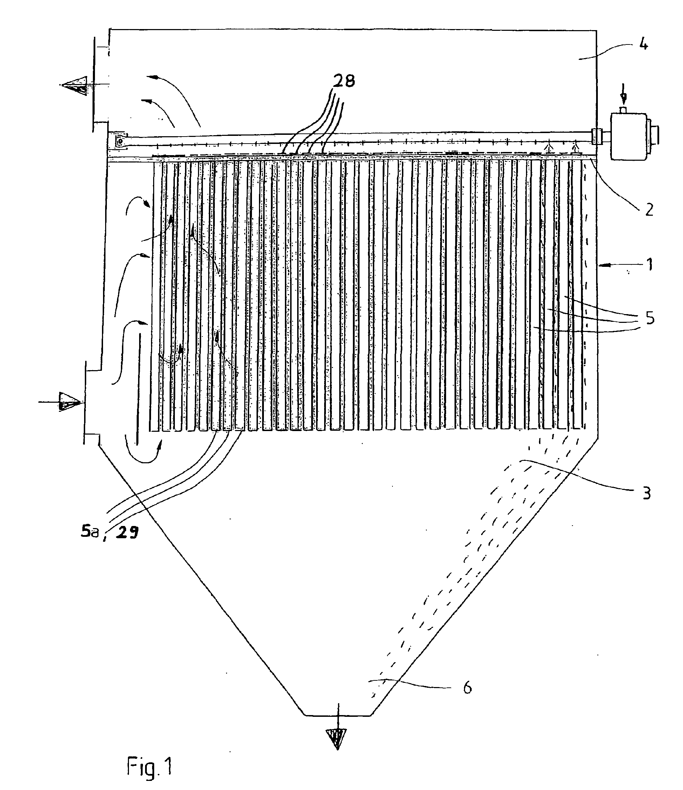

Die Fig. 1 zeigt ein industriell eingesetztes Staubfilter ein einer Gesamtansicht. Das Staubfilter besteht aus einem vertikalen ausgerichteten, vorzugsweise zylindrischen Filtergehäuse 1, welches durch einen horizontal liegenden Trennboden 2 in einen unten liegenden Staubgasraum 3 und einen oben liegenden Reingasraum 4 unterteilt ist. Der Trennboden 2 ist ähnlich einem Rohrboden gestaltet und verfügt über eine Mehrzahl von Öffnungen für darin eingesetzte, langgestreckte Filterelemente. Bei den dargestellten Filterelementen handelt es sich um Filterrohre 5, die an ihrem unteren Ende bei 5a verschlossen und an ihrem oberen Ende offen sind. Die Filterrohre 5 sind von oben her in die Öffnungen des Trennbodens 2 eingehängt, wobei sie sich auf der Oberseite des Trennbodens 2 abstützen. Die wirksame Filterfläche wird durch die Mantelfläche der vorzugsweise zylindrisch gestalteten Filterrohre 5 gebildet. Jeweils mehrere Filterrohre 5 können so zu einander angeordnet werden, daß sie eine Gruppe bzw. ein Filterbündel bilden.

Über einen Kanal des Filtergehäuses gelangt das staubhaltige Gas in das Filter. Zum Reinigen und damit Regenerieren der einzelnen Filterrohre 5 befinden sich oberhalb von deren Öffnungen Druckluftquellen eines Druck-Impulslnjektosystems. Kurzzeitig wird hierüber ein starker Luftstrahl von oben her in die Filterrohre 5 abgegeben, so daß diese von dem an deren Außenflächen ausfiltrierten Staub oder dem staubhaltigen Produkt gereinigt werden.

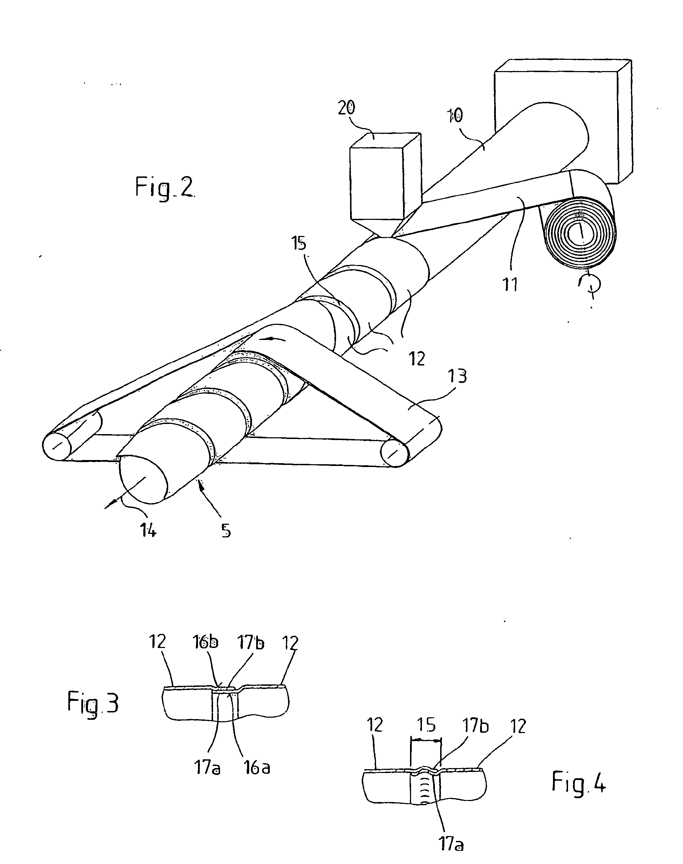

Die Herstellung der Rohrfilter 5 erfolgt in einem Endlos-Wickelverfahren, dessen technische Einzelheiten nachfolgend anhand der Figuren 2, 3, 4, 5a und 5b erläutert werden. Anschließend wird das so hergestellte Rohr auf Länge geschnitten und an seinem einen Ende verschlossen.

Bei dem Herstellungsverfahren wird ein feststehender, zylindrischer Wickeldorn 10 verwendet, dessen Durchmesser in etwa dem Innendurchmesser des darauf hergestellten Rohrfilters 5 entspricht. Mittels einer nicht dargestellten Zuführeinrichtung wird dem Wickeldorn 10 das Filtermaterial in Gestalt einer Materialbahn 11 zugeführt. Hierbei gelangt die Materialbahn 11 schräg zur Längsachse des Wickeldorns 10 auf die Mantelfläche des Wickeldorns 10. Durch dieses schräge Auftreffen entstehen kontinuierlich neue Windungen 12, von denen in Fig. 2 insgesamt sieben Windungen dargestellt sind. Ein das gewickelte Produkt umschlingender Antriebsriemen 13 bewirkt zugleich eine Drehung des gebildeten Produktes, wie auch einen Vortrieb des gebildeten Produktes auf dem feststehenden Wickeldorn 10 gemäß Vortriebspfeil 14. Auf diese Weise ist eine kontinuierliche Fertigung theoretisch beliebig langer Rohrfilter 5 möglich.

Der Antrieb durch den Antriebsriemen 13 ist so auf den Zuführwinkel der Materialbahn 11 auf den Wickeldorn 10 abgestimmt, das sich benachbarte Windungen 12 der Materialbahn entlang ihrer Ränder in Überlappungsbereichen 15 überdecken. Die Verbindung benachbarter Windungen 12 der Materialbahn erfolgt dementsprechend ausschließlich in diesem schmalen Überlappungsbereich 15.

Die Figuren 3 und 4 zeigen in zwei verschiedenen Ausführungsbeispielen und im Querschnitt betrachtet den Überlappungsbereich 15 zwischen zwei benachbarten Windungen 12 der gewickelten Materialbahn. Sowohl im Fall der Fig. 3, wie auch im Fall der Fig. 4 sind im Überlappungsbereich 15 beide beteiligten Ränder 16a, 16b nicht flach gestaltet, wie der übrige Teil der Materialbahn 11, sondern in Gestalt von Profilquerschnitten 17a, 17b verformt. Die beiden Profilquerschnitte 17a, 17b liegen bündig bzw. flächig aneinander an, so daß eine relativ große Kontaktfläche zwischen den Profilquerschnitten besteht. Im Bereich dieser Kontaktflächen sind die Profilquerschnitte 17a, 17b durch Ultraschallschweißen miteinander verbunden.

Die in Gestalt von Profilquerschnitten 17a, 17b gestalteten Ränder der Windungen 12 führen in dem Überlappungsbereich 15 zu einer Versteifung des Materials und damit zu einer erhöhten Festigkeit des Rohrfilters im Bereich der Verbindung benachbarter Windungen. Insgesamt, über das gesamte Rohrfilter 5 betrachtet, stellt sich damit eine gewundene Struktur erhöhter Festigkeit ein, welche dem Rohrfilter insgesamt die erforderliche Festigkeit gibt, auch wenn die verwendete Materialbahn 11 für sich alleine betrachtet eine solche Festigkeit und Steifigkeit nicht verleihen könnte.

In Fig. 2 ist eine nach dem Ultraschallprinzip arbeitende Schweißeinrichtung 20 eingezeichnet. Der Ultraschall trifft vorzugsweise genau dort auf die beiden beteiligten und miteinander zu verbindenden Windungen 12, wo die noch ungewickelte Materialbahn 11 gerade auf die Mantelfläche des Wickeldorns 10 aufgelaufen ist. Auf den erstmaligen Kontakt der neu auf den Wickeldorn auflaufenden Materialbahn 11 mit der bereits aufgewickelten vorherigen Windung folgt daher unmittelbar das Ultraschallverschweißen der sich hierbei überlappenden Ränder.
Auch das Erzeugen der Profilquerschnitte 17a, 17b im Überlappungsbereich erfolgt beim Auflaufen und damit während des ersten Kontaktes der neuen Materialbahn 11 mit dem Wickeldorn 10. Hierzu ist der Wickeldorn 10, wie nachfolgend noch näher erläutert werden wird, mit geeigneten Verformungsstrukturen versehen, welche die Materialbahn 11 in jenem Randbereich verformen, welcher in Kontakt mit den Randbereich der zuletzt entstandenen Windung kommt.

Ein Vergleich der Figuren 3 und 4 läßt erkennen, daß die entlang den gewundenen Materialbahnen ausgebildeten Profilquerschnitte 17a, 17b sich dadurch auszeichnen, daß sie aus der normalen Ebene der Materialbahn 11 radial nach innen oder nach außen versetzt verlaufen. Dabei können die eigentlichen Überlappungsbereiche 15 flach gestaltet sein, wie dies Fig. 3 zeigt, oder im Querschnitt eine konkave oder konvexe Biegung aufweisen, wie dies Fig. 4 zeigt. In beiden Fällen jedoch liegen beide Profilquerschnitte 17a, 17b bündig unmittelbar aneinander an, und sind in dieser Stellung miteinander ultraschallverschweißt.

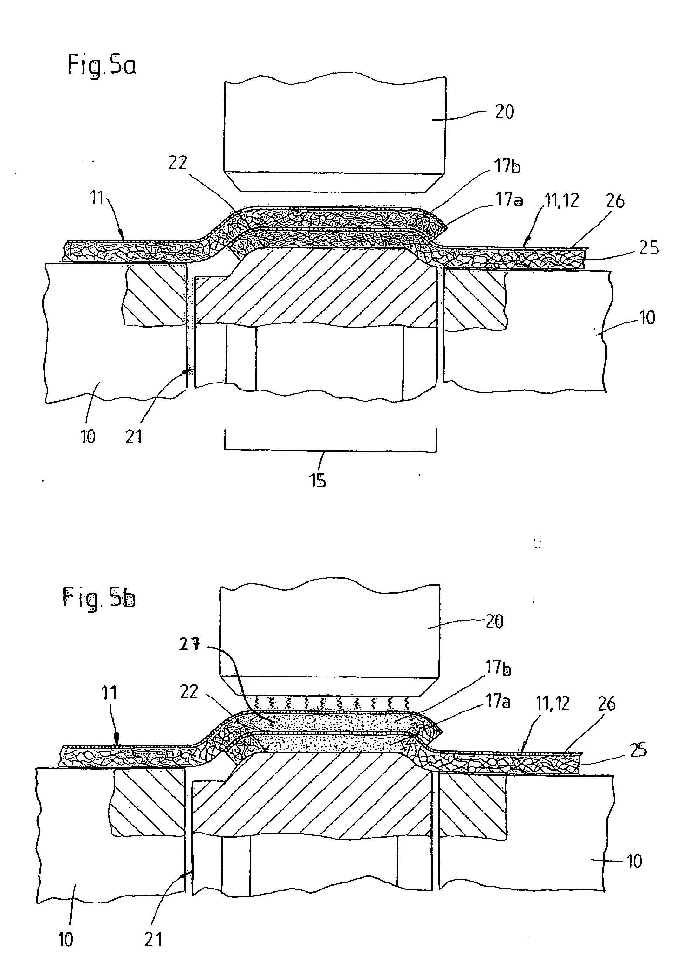

Die Figuren 5a und 5b zeigen in stark vergrößerter Darstellung die Verbindung der Profilquerschnitte 17a, 17b im Überlappungsbereich. Auf dem im übrigen starren Wickeldorn 10 befindet sich ein frei mitlaufender Profilring 21, dessen Außenkontur 22 beide Profilquerschnitte 17a, 17b zugleich formt. Die beim Auftreffen auf den Wickeldorn 10 wirkenden Verformungskräfte sind in erster Linie radial und führen gemäß den Figuren 5a und 5b im Überlappungsbereich zu einem radialen Aufweiten beider beteiligter Profilquerschnitte 17a, 17b, wobei deren gegenseitiger Kontakt nicht verlorengeht. Der Zeitpunkt dieser Verformung ist genau dann, wenn die neue Materialbahn auf den feststehenden Wickeldorn 10 und, mit ihrem inneren Rand, auf dessen frei mitlaufenden Profilring 21 trifft. Ergebnis ist die in den Figuren 5a und 5b gut erkennbare, zueinander korrespondierende Verformung der Ränder, wobei die hierbei erzeugten Profilquerschnitte 17a, 17b radial versetzt zu den jeweils übrigen Bereichen der Windungen bzw. Materialbahnen liegen.

Fig. 5a zeigt den Zustand unmittelbar nach dem Auftreffen des neu zugeführten Abschnittes der Materialbahn auf die bereits gewundene Materialbahn. Fiq. 5b zeigt, zeitlich unmittelbar daran anschließend, das Ultraschallschweißen mittels der Schweißeinrichtung 20. Hierdurch tritt eine Verbindung zwischen den sich überlappenden Profilquerschnitten 17a, 17b ein, ohne daß es irgendwelcher Schweißzusatzstoffe, Klebstoffe oder sonstiger Zusatzstoffe bedarf. Es ist zu vermeiden, daß der Radialdruck des Antriebsriemens 13 die bereits geformten Profilquerschnitte 17a, 17b wieder zurückverformt bzw. beeinträchtigt. Um dies zu vermeiden, kann die Stellung des Antriebsriemens 13 so gewählt werden, daß zwischen den einzelnen Umschlingungen jeweils ein Freiraum entsteht, damit die frisch profilierten Überlappungen nach dem Wickelvorgang nicht wieder geglättet
werden.

In dem durch das Ultraschallschweißen überstrichenen Überlappungsbereich kommt es infolge der Ultraschall-Energie außerdem zu einer Strukturveränderung des Materials der Materialbahn. Die Materialbahn 11 ist zweischichtig aufgebaut mit einer Grundschicht 25 mit stark poröser Struktur. Infolge dieser Porösität ist die Grundschicht 25 für den Filterprozeß die primäre und damit entscheidende Schicht. Auf der Grundschicht 25 befindet sich eine sehr viel dünnere Membranschicht 26 zum Zwecke der Oberflächenfiltration. Die Grundschicht 25 besteht aus einem thermoplastischen Kunststoff, die Membranschicht 26 aus PTFE (Polytetrafluoräthylen).

Durch das Ultraschallschweißen wird die ursprünglich mikroporöse Filterstruktur der Grundschicht 25 in eine weitgehend homogene Materialstruktur 27 umgeformt. Die Homogenisierung des Filtermaterials aus thermoplastischem Kunststoff führt zu einer lokalen Verfestigung und unterstützt auf diese Weise die voranstehend bereits erläuterte, formbedingte Steifigkeitserhöhung in den Überlappungsbereichen des Rohrfilters.

Es hat sich herausgestellt, daß die Membranschicht 26 aus PTFE-Folie den Prozeß des Ultraschallverschweißens in keiner Weise behindert oder einschränkt. Es ist daher insbesondere nicht erforderlich, vor der Verbindung benachbarter Windungen die Membranschicht 26 im Überlappungsbereich 15 zunächst zu entfernen. Auch dieser Umstand macht das beschriebene Verfahren besonders einfach und kostengünstig anwendbar.

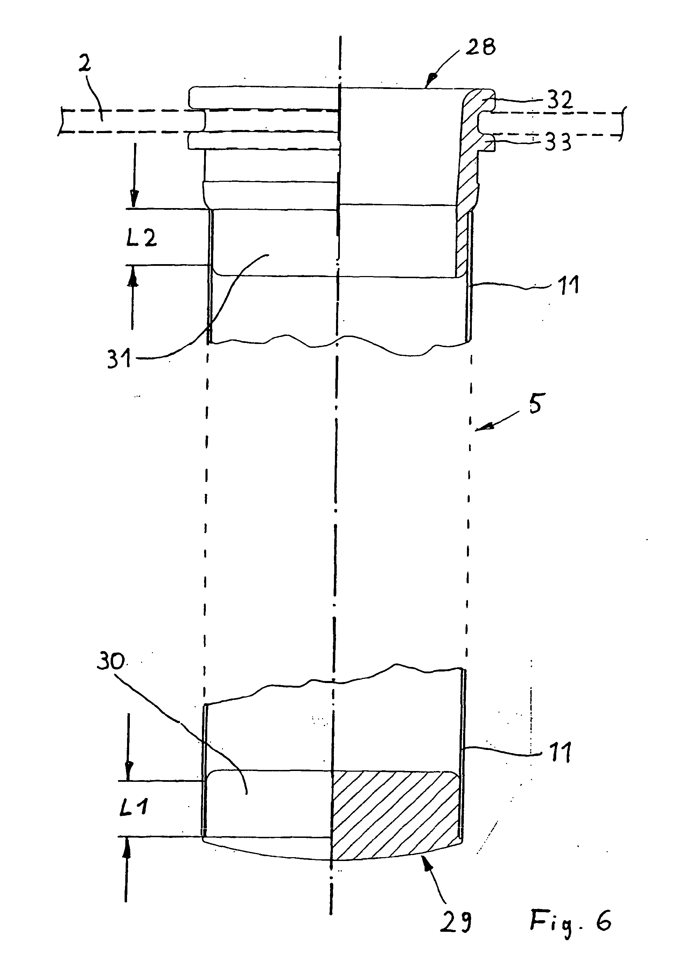

Die Fig. 6 zeigt in stark verkürzter Darstellung das Rohrfilter 5 in seiner Gesamtheit und nach dessen Fertigstellung, d.h. einschließlich eines das Filter an seinem unteren Ende verschließenden Verschlusses 5a sowie eines Filterkopfes 28, mit dem das Rohrfilter in eine entsprechende Öffnung des Trennbodens 2 einhängbar ist. Als unterer Verschluß dient ein Stopfen 29 aus vorzugsweise dem gleichen Material wie die gewickelte Materialbahn. Der Stopfen 29 ragt mit einem zylindrischen Ansatz 30 von unten dicht in das Filterrohr. Hierbei liegt der zylindrische Ansatz 30 über der Länge L1 an der Innenwandung des Filterrohrs an, und ist im Bereich dieses Längenabschnitts mit dem Filterrohr verschweißt, und zwar wiederum durch das bereits beschriebene Ultraschall-Verschweißen. Bei der Auswahl des Materials für den Stopfen ist daher auf eine gute Verschweissbarkeit mit dem Material der Materialbahn zu achten. Von Vorteil sind Materialien mit vergleichbarer Temperaturbeständigkeit wie das eigentliche Filterrohr. Während des Verschweißens umgreifen nach innen zustellbare Backen den Längenabschnitt L1 und sorgen auf diese Weise für die notwendige Fixierung und den notwendigen Druck.

In gleicher Weise wie der Stopfen 29 wird auch der Filterkopf 28 mit dem bereits fertig gewickelten und dann auf die gewünschte Länge geschnittenen Filterrohr 5 verbunden und schließlich durch Ultraschall mit diesem verschweißt. Auch hier erfolgt die Verschweißung über einen Längsabschnitt L2, der durch einen zylindrischen Ansatz 31 am einen Ende des Filterkopfes gebildet wird. Flansche 32,33 am anderen Ende des Filterkopfes 28 geben diesem den erforderlichen Halt im Trennboden 2 des Staubfilters.

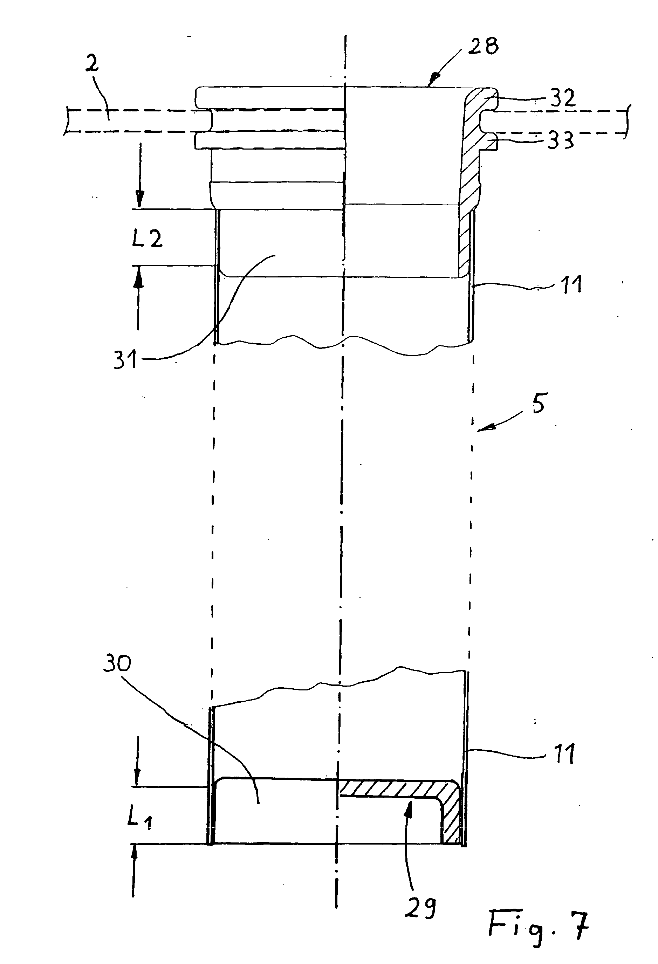

Bei der Variante nach Fig. 7 ist der Stopfen 29 ein Hohlkörper mit nach außen weisender Öffnung.

### Bezugszeichenliste

- 1: Filtergehäuse
- 2: Trennboden
- 3: Staubgasraum
- 4: Reingasraum
- 5: Rohrfilter
- 5a: Verschluß des Filterrohrs
- 6: Staubaustrag
- 10: Wickeldorn
- 11: Materialbahn
- 12: Windung
- 13: Antriebsriemen
- 14: Vortriebspfeil
- 15: Überlappungsbereich
- 16a: Rand
- 16b: Rand
- 17a: Profilquerschnitt
- 17b: Profilquerschnitt
- 20: Schweißeinrichtung
- 21: Profilring
- 22: Außenkontur
- 25: Grundschicht, Filterschicht
- 26: Membranschicht
- 27: homogene Materialstruktur
- 28: Filterkopf
- 29: Stopfen
- 30: Ansatz
- 31: Ansatz
- 32: Flansch
- 33: Flansch
- L1: Länge
- L2: Länge

## Patentansprüche

1. Verfahren zur Herstellung eines Rohfilters durch Wickeln einer kontinuierlich zugeführten Materialbahn aus porösem, gasdurchlässigem Filtermaterial, wobei der Rand der bei dem Wickelprozeß neu erzeugten Windung der Materialbahn den Außenrand der zuletzt erstellten Windung überlappt, und die Windungen im Überlappungsbereich dauerhaft miteinander verbunden werden,
**dadurch gekennzeichnet,**
**daß** beide beteiligten Ränder in ihren Überlappungsbereichen (15) durch ausschließlich auf die Ränder einwirkende Verformungskräfte zu Profilquerschnitten (17a, 17b) verformt werden, die bündig aneinandertiegen, daß die Profilquerschnitte (17a, 17b) in ihren Überlappungsbereichen (15) durch Ultraschallschweißen verbunden werden, daß die Materialbahn (11) in schräger Ausrichtung einem feststehenden zylindrischen Wickeldorn (10) zugeführt wird, und daß die Verformungskräfte über einen in dem Wickeldorn (10) drehbar gelagerten Profilring (21) in die beiden beteiligten Ränder eingeleitet werden.

2. Verfahren nach Anspruch 1, **dadurch gekennzeichnet, daß** die zugeführte Materialbahn (11) mindestens zweilagig aus einer mikroporösen Filterschicht (25) und einer Membranschicht (26) aufgebaut ist.

3. Verfahren nach Anspruch 2, **gekennzeichnet durch** Verwendung einer mikroporösen PTFE-Folie als Membranschicht (26).

4. Verfahren nach einem der Ansprüche 1 bis 3, **gekennzeichnet durch** Verwendung einer mikroporösen Filterschicht (25) aus einem thermoplastischen Kunststoff.

5. Verfahren nach einem der Ansprüche 1 bis 4, **dadurch gekennzeichnet, daß** die Ränder zu einem konkaven oder konvexen Profilquerschnitt (17a, 17b) verformt werden.

6. Verfahren nach einem der vorangehenden Ansprüche, **dadurch gekennzeichnet, daß** das gewickeite Filterrohr auf die gewünschte Länge geschnitten und an seinem einen Ende mit einem Stopfen (29) und an seinem anderen Ende mit einem offenen Filterkopf (28) versehen wird, und daß der Stopfen (29) und/oder der Filterkopf (28) durch Ultraschallschweißen mit dem gewickelten Filterrohr verbunden wird.

7. Rohrfilter, bestehend aus einer zu einem Rohr gewickelten flachen Materialbahn (11) aus porösem, gasdurchlässigem Filtermaterial, deren aufeinanderfolgende Windungen (12) sich an ihren Rändern überlappen,
**dadurch gekennzeichnet,**
**daß** die Materialbahn (11) im Überlappungsbereich (15) einen Profilquerschnitt (17a, 17b) aufweist, der aus der Ebene der Materialbahn (11) radial nach innen oder außen versetzt verläuft, und daß jeder Profilquerschnitt (17a) an dem ihn überlappenden Profilquerschnitt (17b) der jeweils benachbarten Windung (12) bündig anliegt und im Überlappungsbereich (15) durch Ultraschallverschweißung mit diesem verbunden ist.

8. Rohrfilter nach Anspruch 7, **dadurch gekennzeichnet, daß** beide Ränder der Materialbahn (11) einen konkaven oder einen konvexen Profilquerschnitt (17a, 17b) aufweisen.

9. Rohrfilter nach Anspruch 7 oder Anspruch 8, **dadurch gekennzeichnet, daß** die Materialbahn (11) mindestens zweilagig ist mit einer Grundschicht (25) aus Filtermaterial und einer Membranschicht (26).

10. Rohrfilter nach Anspruch 9, **gekennzeichnet durch** eine Membranschicht (26) aus PTFE-Folie.

11. Rohrfilter nach einem der Ansprüche 7 bis 10, **gekennzeichnet durch** eine filtrierende Gruridschicht (25) aus thermoplastischem Kunststoff.

12. Rohrfilter nach Anspruch 11, **dadurch gekennzeichnet, daß** die Grundschicht (25) der Materialbahn im Überlappungsbereich (15) einen homogenen Materialaufbau, und über ihre übrige Fläche eine mikroporöse Filterstruktur aufweist.

13. Rohrfilter nach einem der Ansprüche 7 bis 12, **dadurch gekennzeichnet, daß** in das eine Ende des Filterrohres (5) ein Stopfen (29), und in das andere Ende des Filterrohres ein Filterkopf (28) jeweils mit einem Ansatz (30,31) eingesetzt ist, und daß die Ansätze (30,31) jeweils durch Ultraschallverschweißung mit der Innenwandung des gewickelten Filterrohres (5) verbunden sind.

## Revendications

1. Procédé de fabrication d'un filtre tubulaire par enroulement d'une bande de matériau amenée en continu, en un matériau pour filtre poreux et perméable aux gaz, le bord de la nouvelle spire, produite lors du processus d'enroulement, de la bande de matériau, recouvrant le bord extérieur de la dernière spire réalisée, et les spires étant reliées durablement entre elles dans la zone du recouvrement,
**caractérisé**
**en ce que** les deux bords concernés sont déformés dans leurs zones de recouvrement (15) par des forces de déformation, agissant exclusivement sur les bords, en sections transversales profilées (17a, 17b) qui s'appliquent bout à bout l'une contre l'autre, en ce que les sections transversales profilées (17a, 17b) sont reliées dans leurs zones de recouvrement (15) par soudage aux ultrasons, en ce que la bande de matériau (11) est amenée, dans une orientation oblique, à un mandrin de bobinage (10) cylindrique fixe, et en ce que les forces de déformation sont introduites dans les deux bords concernés par un anneau profilé (21) monté tournant dans le mandrin de bobinage (10).

2. Procédé selon la revendication 1, **caractérisé en ce que** la bande de matériau (11) amenée est constituée, au moins sur deux couches, d'une couche filtrante (25) microporeuse et d'une couche à membrane (26).

3. Procédé selon la revendication 2, **caractérisé par** l'utilisation d'une feuille de PTFE microporeuse servant de couche à membrane (26).

4. Procédé selon l'une des revendications 1 à 3, **caractérisé par** l'utilisation d'une couche filtrante microporeuse (25) constituée d'une matière thermoplastique.

5. Procédé selon l'une des revendications 1 à 4, **caractérisé en ce que** les bords sont déformés en une section transversale profilée (17a, 17b) concave ou convexe.

6. Procédé selon l'une des revendications précédentes, **caractérisé en ce que** le tube filtrant enroulé est coupé à la longueur souhaitée et est pourvu, à l'une de ses extrémités, d'un bouchon (29) et, à son autre extrémité, d'une tête de filtre ouverte (28), et **en ce que** le bouchon (29) et/ou la tête de filtre (28) sont reliés au tube filtrant enroulé, par soudage aux ultrasons.

7. Filtre tubulaire, constitué d'une bande de matériau (11) plate, enroulée en un tube, constituée d'un matériau filtrant poreux et perméable aux gaz dont les spires (12) successives se recouvrent sur leurs bords,
**caractérisé**
**en ce que** la bande de matériau (11) présente, dans la zone de recouvrement (15), une section transversale profilée (17a, 17b) qui s'étend décalée radialement vers l'intérieur ou l'extérieur, hors du plan de la bande de matériau (11), et en ce que chaque section transversale profilée (17a) s'applique bout à bout contre la section profilée (17b) la recouvrant de la spire (12) voisine, et est reliée à celle-ci dans la zone de recouvrement (15), par soudage aux ultrasons.

8. Filtre tubulaire selon la revendication 7, **caractérisé en ce que** les deux bords de la bande de matériau (11) présentent une section transversale profilée (17a, 17b) concave ou convexe.

9. Filtre tubulaire selon la revendication 7 ou la revendication 8, **caractérisé en ce que** la bande de matériau (11) est au moins à deux couches, avec une couche de base (25) constituée d'un matériau filtrant et avec une couche à membrane (26).

10. Filtre tubulaire selon la revendication 9, **caractérisé par** une couche à membrane (26) réalisée dans une feuille de PTFE.

11. Filtre tubulaire selon l'une des revendications 7 à 10, **caractérisé par** une couche de base (25) filtrante en une matière thermoplastique.

12. Filtre tubulaire selon la revendication 11, **caractérisé en ce que** la couche de base (25) de la bande de matériau présente, dans la zone de recouvrement (15), une constitution homogène du matériau, et sur le reste de sa surface, une structure filtrante microporeuse.

13. Filtre tubulaire selon l'une des revendications 7 à 12, **caractérisé en ce que** dans une extrémité du tube filtrant (5) est inséré un bouchon (29), et dans l'autre extrémité du tube filtrant, une tête de filtre (28), respectivement avec un embout (30, 31), et **en ce que** les embouts (30, 31) sont reliés chacun par soudage aux ultrasons à la paroi intérieure du tube filtrant (5) enroulé.

## Claims

1. Method for producing a tubular filter by winding a continuously supplied material web of porous, gas-permeable material, wherein the edge of the winding of the material web newly produced during the winding process overlaps the outer edge of the last-formed winding, and the windings are permanently joined to one another in the overlap region, **characterized in that** the two involved edges are deformed in their overlap regions (15) by deformation forces acting only on the edges, so as to form profiled cross sections (17a, 17b) which lie flush against one another, **in that** the profiled cross sections (17a, 17b) are joined in their overlap regions (15) by means of ultrasonic welding, **in that** the material web (11) is fed in oblique orientation to a stationary cylindrical mandrel (10), and **in that** the deformation forces are introduced into the two involved edges via a profiled ring (21) mounted rotatably in the mandrel (10).

2. Method according to Claim 1, **characterized in that** the supplied material web (11) comprises at least two layers, consisting of a microporous filter layer (25) and a membrane layer (26).

3. Method according to Claim 2, **characterized by** using a microporous PTFE film as membrane layer (26).

4. Method according to any of Claims 1 to 3, **characterized by** using a microporous filter layer (25) made of a thermoplastic.

5. Method according to any of Claims 1 to 4, **characterized in that** the edges are deformed to form a concave or convex profiled cross section (17a, 17b).

6. Method according to any of the preceding claims, **characterized in that** the wound filter tube is cut to the desired length and is provided at one end with a stopper (29) and at its other end with an open filter head (28), and **in that** the stopper (29) and/or the filter head (28) is joined to the wound filter tube by means of ultrasonic welding.

7. Tubular filter consisting of a flat material web (11) of porous, gas-permeable filter material which is wound to form a tube, the successive windings (12) of which web overlap at their edges, **characterized in that** the material web (11) has in the overlap region (15) a profiled cross section (17a, 17b) which runs radially inwards or outwards in an offset manner, and **in that** each profiled cross section (17a) bears flush against the overlapping profiled cross section (17b) of the respectively adjacent winding (12) and is joined to the latter in the overlap region (15) by means of ultrasonic welding.

8. Tubular filter according to Claim 7, **characterized in that** the two edges of the material web (11) have a concave or a convex profiled cross section (17a, 17b).

9. Tubular filter according to Claim 7 or Claim 8, **characterized in that** the material web (11) comprises at least two layers, with a base layer (25) of filter material and a membrane layer (26).

10. Tubular filter according to Claim 9, **characterized by** a membrane layer (26) made of PTFE film.

11. Tubular filter according to any of Claims 7 to 10, **characterized by** a filtering base layer (25) made of thermoplastic.

12. Tubular filter according to Claim 11, **characterized in that** the base layer (25) of the material web has a homogeneous material structure in the overlap region (15), and has a microporous filter structure over its remaining surface.

13. Tubular filter according to any of Claims 7 to 12, **characterized in that** a stopper (29) is inserted in one end of the filter tube (5) and a filter head (28) is inserted in the other end of the filter tube, said stopper and said filter head each having an extension (30, 31), and **in that** the extensions (30, 31) are in each case joined to the inner wall of the wound filter tube (5) by means of ultrasonic welding.
